(19) Europäisches Patentamt / European Patent Office / Office européen des brevets

(11) **EP 3 101 717 B1**

(12) **EUROPEAN PATENT SPECIFICATION**

(45) Date of publication and mention of the grant of the patent:
**12.09.2018 Bulletin 2018/37**

(21) Application number: **15742875.6**

(22) Date of filing: **28.01.2015**

(51) Int Cl.:
*H01M 4/62* (2006.01)       *H01M 4/525* (2010.01)
*H01M 4/505* (2010.01)      *H01M 4/13* (2010.01)
*H01M 10/0525* (2010.01)   *H01M 10/42* (2006.01)
*H01M 4/36* (2006.01)        *H01M 4/02* (2006.01)

(86) International application number:
**PCT/KR2015/000936**

(87) International publication number:
**WO 2015/115815 (06.08.2015 Gazette 2015/31)**

(54) **SURFACE-COATED CATHODE ACTIVE MATERIAL, METHOD FOR PREPARING SAME, AND LITHIUM SECONDARY BATTERY INCLUDING SAME**

OBERFLÄCHENBESCHICHTETES KATHODENAKTIVMATERIAL, VERFAHREN ZUR HERSTELLUNG DAVON UND LITHIUMSEKUNDÄRBATTERIE DAMIT

MATÉRIAU ACTIF DE CATHODE À SURFACE REVÊTUE, SON PROCÉDÉ DE PRÉPARATION, ET BATTERIE SECONDAIRE AU LITHIUM LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.01.2014 KR 20140010008**

(43) Date of publication of application:
**07.12.2016 Bulletin 2016/49**

(73) Proprietors:
• **LG Chem, Ltd.**
  **Seoul 150-721 (KR)**
• **UNIST (Ulsan National Institute of Science and Technology)**
  **Ulsan 44919 (KR)**

(72) Inventors:
• **JANG, Wook**
  **Daejeon 305-738 (KR)**
• **LEE, Sang Young**
  **Busan 612-790 (KR)**
• **CHO, Seung Beom**
  **Daejeon 305-738 (KR)**
• **PARK, Jang Hoon**
  **Gunpo-si**
  **Gyeonggi-do 435-854 (KR)**
• **KIM, Ju Myung**
  **Ulju-gun**
  **Ulsan 689-798 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
  WO-A1-2013/147087      KR-A- 20080 071 387
  KR-A- 20100 081 947    KR-A- 20110 126 418
  KR-A- 20130 139 711    US-A1- 2013 177 807

• **HUANHUAN KOU ET AL: "Electrochemical atomic layer deposition of a CuInSethin film on flexible multi-walled carbon nanotubes/polyimide nanocomposite membrane: Structural and photoelectrical characterizations", ELECTROCHIMICA ACTA, ELSEVIER SCIENCE PUBLISHERS, BARKING, GB, vol. 56, no. 16, 29 March 2011 (2011-03-29), pages 5575-5581, XP028386268, ISSN: 0013-4686, DOI: 10.1016/J.ELECTACTA.2011.03.128 [retrieved on 2011-04-07]**

EP 3 101 717 B1

- PARK J H ET AL: "Polyimide gel polymer electrolyte-nanoencapsulated LiCoO2 cathode materials for high-voltage Li-ion batteries", ELECTROCHEMISTRY COMMUNICATIONS, ELSEVIER, AMSTERDAM, NL, vol. 12, no. 8, 1 August 2010 (2010-08-01) , pages 1099-1102, XP027137114, ISSN: 1388-2481, DOI: 10.1016/J.ELECOM.2010.05.038 [retrieved on 2010-06-02]

- PARK, JANG-HOON ET AL.: 'Polyimide gel polymer electrolyte-nanoencapsulated LiCo02 cathode materials for high-voltage Li-ion batteries' ELECTROCHEMISTRY COMMUNICATIONS vol. 12, no. 8, 02 June 2010, ISSN 1388-2481 pages 1099 - 1102, XP027137114

**Description**

## TECHNICAL FIELD

The present invention relates to a surface-coated positive electrode active material, a method of preparing the same, and a lithium secondary battery including the same, and more particularly, to a positive electrode active material which is surface-coated with a nanofilm including polyimide (PI) and a fibrous carbon material, a method of preparing the same, and a lithium secondary battery including the same.

## BACKGROUND ART

Since a lithium secondary battery appeared as a compact, lightweight, and high-capacity battery in 1991, lithium secondary batteries have been extensively used as power supplies of portable devices. With the recent rapid development in electronic, communication, and computer industry, camcorders, cellular phones, laptops, personal computers, and the like appeared and are being constantly developed. Moreover, demands for lithium secondary batteries as power sources for driving such mobile electronic devices for information and communication are increasing.

The lithium secondary battery has a limitation in that cycle life thereof rapidly decreases as it is repeatedly charged and discharged.

Such a decrease in cycle life characteristics is due to side reactions between a positive electrode and an electrolytic solution, and this phenomenon may become more serious in the state of high voltage and high temperature.

Therefore, development of a secondary battery for high voltage is required, and to this end, technologies for controlling side reactions between a positive electrode active material and an electrolytic solution or reactions at electrode interfaces are very important.

In order to solve these limitations, techniques for coating metal oxides including Mg, Al, Co, K, Na, Ca, or the like onto the surface of a positive electrode active material were developed.

Particularly, it is generally known that oxides such as $Al_2O_8$, $ZrO_2$, and $AlPO_4$ may be coated onto the surface of a positive electrode active material. It is also an established theory that such a coating layer improves stability characteristics of a positive electrode active material.

However, in the case of a surface coating using the aforementioned oxide coating layer, the oxide coating layer does not entirely cover the surface of a positive electrode active material, but nano-sized particles are finely dispersed in the positive electrode active material.

Accordingly, surface modification of a positive electrode active material using an oxide coating layer could not choose but to have a limited effect. Furthermore, the aforementioned oxide coating layer is a kind of ion insulating layer through which lithium ions are difficult to move, and may result in a decrease in ionic conductivity.

Prior art (partially) coated electrode active materials and their preparations are shown e.g. in WO2013/147087A1, US2013/0177807A1, KR 10-2010-0081947A, or in Park, J.H. et al., Electrochemistry Communications, 2010, vol. 12, no. 8, pp. 1099-1102.

## DISCLOSURE OF THE INVENTION

## TECHNICAL PROBLEM

Therefore, the present invention has been devised to solve the above limitations.

The present invention is defined in independent claims 1 and 9. It is an object of the present invention to provide a positive electrode active material having cycle life characteristics and high conductivity under a normal-voltage condition, and particularly under a high-temperature and high-voltage condition by coating the entire surface of the positive electrode active material with a nanofilm through which lithium ions are movable to prevent side reactions between the positive electrode active material and an electrolytic solution.

## TECHNICAL SOLUTION

According to an embodiment of the present invention, there is provided a surface-coated positive electrode active material including: a positive electrode active material particle; and a nanofilm coated on the entire surface of the positive electrode active material particle, wherein the nanofilm includes polyimide (PI) and a fibrous carbon material.

Also, according to an embodiment of the present invention, there is provided a method of preparing a surface-coated positive electrode active material, the method including: mixing and dispersing a fibrous carbon material into an organic solvent in which a polyamic acid is diluted to prepare a mixed solution; dispersing a positive electrode active material into the mixed solution to form, on the surface of the positive electrode active material particle, a film including the polyamic acid and the fibrous carbon material; and performing imidization of the positive electrode active material including the film.

According to the invention, the fibrous carbon material is a carbon nanotube.

In addition, the present invention provides a positive electrode including the surface-coated positive electrode active material.

Furthermore, the present invention provides a lithium secondary battery including the positive electrode.

## ADVANTAGEOUS EFFECTS

According to an embodiment of the present invention, when the surface of a positive electrode active material is coated with a nanofilm including polyamide and a fibrous carbon material, a direct contact between the positive electrode active material and an electrolytic solution is prevented, and thus side reactions between the positive electrode active material and the electrolytic solution may be inhibited. Therefore, cycle life characteristics of a secondary battery may be significantly improved. Particularly under a high-temperature and high-voltage condition, cycle life characteristics and conductivity may be improved.

## BRIEF DESCRIPTION OF THE DRAWINGS

The accompanying drawings herein illustrate exemplary embodiments of the present invention and, together with the description, serve to provide a further understanding of the inventive concept, and thus the present invention should not be construed as being limited to only the drawings. In the drawings:

FIG. 1 is electron micrographs (FE-SEM) of the surface of a positive electrode active material which is surface-coated with a nanofilm including polyamide and a fibrous carbon material and prepared in Preparation Example 1 according to the present invention;

FIG. 2 is electron micrographs (FE-SEM) of a positive electrode active material which is not surface-coated and prepared in Comparative Preparation Example 1; and

FIG. 3 is electron micrographs (FE-SEM) of a positive electrode active material which is surface-coated with polyamide and prepared in Comparative Preparation Example 2.

## MODE FOR CARRYING OUT THE INVENTION

Hereinafter, the present invention will be described in more detail to facilitate understanding of the present invention.

Terms or words used in the description and claims should not be restrictively interpreted as ordinary or dictionary meanings, but should be interpreted as meanings and concepts conforming to the inventive concept on the basis of a principle that an inventor can properly define the concept of a term to explain his or her own invention in the best ways.

A surface-coated positive electrode active material according to an embodiment of the present invention includes: a positive electrode active material; and a nanofilm coated on the surface of the positive electrode active material, wherein the nanofilm includes polyamide (PI) and a fibrous carbon material.

The nanofilm included in the surface-coated positive electrode active material according to an embodiment of the present invention, is not an ion insulating layer such as a typical inorganic oxide layer which has been generally coated on a surface, but may include polyimide and a fibrous carbon material in which lithium ions are movable.

When the nanofilm is coated on the surface of a positive electrode active material, side reactions between the positive electrode active material and an electrolytic solution are prevented, and cycle life characteristics of a secondary battery may thus be improved. Particularly, the nanofilm is characterized by being coated as a thin film covering the entire surface of the positive electrode active material. Accordingly, the surface-coated positive electrode active material may further improve cycle life characteristics and conductivity under a normal-voltage condition, and particularly under a high-temperature and high-voltage condition.

Specifically, polyimide included in the nanofilm may act as a protective layer preventing a direct contact between the positive electrode active material and an electrolytic solution.

In addition, the fibrous carbon material included together with the polyamide in the nanofilm is a highly crystalline carbonaceous material and has very high electrical conductivity and lithium ion conductivity, so that the fibrous carbon material may serve to provide a path through which reaction with lithium ions may be performed in the electrode. Therefore, current and voltage distributions in the electrode are uniformly maintained during charge/discharge cycles, and cycle characteristics may thus be greatly improved. Particularly, carbon nanotubes have a very high strength and a high fracture resistance, and thus may prevent a current collector from being deformed by repetitive charge/discharge or external forces. Carbon nanotubes may also prevent surface oxidation of the current collector under abnormal battery environments such as a high temperature and overcharging, so that the stability of a battery may be greatly improved.

Furthermore, the polyimide has a high ionic conductivity, and thus gives a high bond strength with the fibrous carbon material having a high electrical conductivity. Accordingly, in addition to the fibrous carbon material, the polyamide may improve lithium ion conductivity and/or electrical conductivity, and form a rigid nanofilm while preventing the active material from directly contacting with an electrolytic solution. Thus, a positive electrode active material having the nanofilm may be complementary in terms of electrical conductivity and ionic conductivity since the nanofilm includes both polyimide having a high ionic conductivity and a fibrous carbon material having a high electrical conductivity.

The fibrous carbon material is according to the present invention a carbon nanotube (CNT). That is, the fibrous carbon material may be used under the concept that the fibrous carbon material includes a shape having a diameter in a nanometer-scale range and a small aspect ratio. Furthermore, the fibrous carbon material may include a linear shape or any shape that may be, for example, curved or bent over the full length thereof or a portion of the length thereof.

The fibrous carbon material may have an average diameter of 5 to 100 nm, preferably 20 to 80 nm, and more preferably 10 to 50 nm. Also, the fibrous carbon material may have an average major axis length of 0.1 to 5 $\mu$m, and preferably 0.5 to 3 $\mu$m.

Also, the fibrous carbon material may have an aspect ratio of 1 to 1,000, preferably 1 to 300 or 6 to 300, and more preferably 1 to 150, 6 to 150, or 10 to 150. When the aspect ratio of the fibrous carbon material is less than 1, the nanofilm formed together with polyimide is difficult to adhere on the active material, and thus may be detached. When the aspect ratio is greater than 1,000, the fibrous carbon material is difficult to be dispersed during the formation of the nanofilm, so that it may be difficult for the fibrous carbon material to be uniformly distributed over the film.

In a positive electrode active material according to an embodiment of the present invention, the content of the polyimide and the fibrous carbon material may be included in the nanofilm at the weight ratio of 1:1 to 1:10. When the content of the polyimide and the fibrous carbon material is less than 1:1, it may be difficult to obtain a sufficient electrical conductivity. When the content is greater than 1:10, the fibrous carbon material may be detached from the nanofilm.

Furthermore, the content of the fibrous carbon material may be, based on total 100 wt% of the surface-coated positive electrode active material, 0.05 to 5 wt%, and preferably 0.2 to 2 wt%.

In a surface-coated positive electrode active material according to an embodiment of the present invention, the nanofilm may have a thickness of 1 to 200 nm, and preferably 5 to 50nm. When the thickness of the nanofilm is less than 1 nm, the side reaction effect between the positive electrode active material and an electrolytic solution and an increase in electrical conductivity, which are resulted from the nanofilm, may be insignificant. On the other hand, when the thickness of the nanofilm is greater than 200 nm, the thickness of the nanofilm becomes too large, so that mobility of lithium ions is impeded and resistance may increase.

According to an embodiment of the present invention, the positive electrode active material may be used for normal-voltage or high-voltage applications, and any compound capable of intercalating/deintercalating lithium reversibly may be unrestrictedly used as the positive electrode active material.

Specifically, a surface-coated positive electrode active material according to an embodiment of the present invention may include any one or a compound oxide of two or more selected from the group consisting of $V_2O_5$, TiS, MoS, and a spinel-type lithium transition metal oxide which has a hexagonal layer rock-salt structure, an olivine structure, or a cubic structure, and has a high capacity.

More specifically, the positive electrode active material may include any one or a mixture of two or more selected from the group consisting of oxides having Chemical Formulas 1 to 3 below, $V_2O_5$, TiS, and MoS.

<Chemical Formula 1>     $Li_{1+x}[Ni_aCo_bMn_c]O_2$

where, $-0.5 \leq x \leq 0.6$; $0 \leq a, b, c \leq 1$; and $x+a+b+c=1$.

<Chemical Formula 2>     $LiMn_{2-x}M_xO_4$

where, M is at least one selected from the group consisting of Ni, Co, Fe, P, S, Zr, Ti, and Al; and $0 \leq x \leq 2$.

<Chemical Formula 3>     $Li_{1+a}Fe_{1-x}M_x(PO_{4-b})X_b$

where, M is at least one selected from the group consisting of Al, Mg, Ni, Co, Mn, Ti, Ga, Cu, V, Nb, Zr, Ce, In, Zn, and Y; X is at least one selected from the group consisting of F, S, and N; $-0.5 \leq x \leq 0.5$; $0 \leq x \leq 0.5$; and $0 \leq b \leq 0.1$.

More specifically, the positive electrode active material may include any one or a mixture of two or more selected from the group consisting of $LiCoO_2$, $LiNiO_2$, $LiMnO_2$, $LiMn_2O_4$, $Li[Ni_aCo_bMn_c]O_2$ ($0 < a, b, c \leq 1$, and $a+b+c=1$), and $LiFePO_4$.

Meanwhile, the present invention may provide a method of preparing the surface-coated positive electrode active material.

A method of preparing a positive electrode active material according to an embodiment of the present invention, may include: mixing and dispersing a fibrous carbon material into an organic solvent in which a polyamic acid is diluted to prepare a mixed solution (step i); dispersing a positive electrode active material into the mixed solution to form, on the surface of the positive electrode active material, a film including the polyamic acid and the fibrous carbon material (step ii); and performing imidization of the positive electrode active material including the film (step iii).

Specifically, in a method of preparing a surface-coated positive electrode active material according to an embodiment of the present invention, step i) may include mixing and dispersing a fibrous carbon material into an organic solvent in which a polyamic acid is diluted to prepare a mixed solution.

The polyamic acid may be prepared using aromatic anhydride and diamine by ordinary methods used in the art.

More specifically, the polyamic acid may be prepared by making aromatic anhydride react with diamine in the same equivalent weight.

The aromatic anhydride, for example, may include any one or a mixture of two or more selected from the group consisting of phthalic anhydride, pyromellitic dianhydride, 3,3'4,4'-biphenyltetracarboxylic dianhydride, 4'4-oxydiphthalic anhydride, 3,3'4,4'-benzophenonetetracarboxylic dianhydride, trimellitic ethylene glycol, 4,4'-(4'4-isopropylbiphenoxy)biphthalic anhydride, and trimellitic anhydride.

Also, the diamine, for example, may include any one or a mixture of two or more selected from the group consisting of 4,4'-oxydianiline, p-phenyl diamine, 2,2-bis(4-(4-aminophenoxy)-phenyl)propane, p-methylenedianiline, propyltetramethyldisiloxane, polyaromatic amine, 4,4'-diaminodiphenyl sulfone, 2,2'-bis(trifluoromethyl)-4,4'-diaminobiphenyl, and 3,5-diamino-1,2,4-triazole.

According to an embodiment of the present invention, the polyamic acid may include a quaternary polyamic acid, and the quaternary polyamic acid preferably includes pyromellitic dianhydride, biphenyl dianhydride, phenylenediamine, and oxydianiline.

The polyamic acid may be used as being diluted in the amount of 0.1 to 1 part by weight, based on 100 parts by weight of the organic solvent.

The organic solvent, although not limited to, may be any solvent which is capable of dissolving the polyamic acid, and preferably may include any one or a mixture of two or more selected from the group consisting of cyclohexane, carbon tetrachloride, chloroform, methylene chloride, dimethylformamide, dimethylacetamide, and N-methylpyrrolidone.

The fibrous carbon material may have an aspect ratio of 1 to 1,000, preferably 1 to 300 or 6 to 300, and more preferably 1 to 150, 6 to 150, or 10 to 150. The fibrous carbon material having such an aspect ratio may have a relatively smaller aspect ratio compared with those generally used in the art.

Meanwhile, since fibrous carbon materials have inherently a strong tendency to cohere each other, there was a limitation in that the fibrous carbon material is difficult to be dispersed when the fibrous carbon material is to be dispersed into an organic solvent in which a polyamic acid is diluted. However, in the present invention, the fibrous carbon material was subjected to a surface treatment in order to prevent degradation of dispersibility in the nanofilm, which is caused by the cohesive property of the fibrous carbon material. Therefore, the dispersibility in the nanofilm was able to be improved.

The surface treatment may be performed by a method using plasma or a method in which a functional group such as a carboxyl group, a hydroxyl group, or an amine group is conjugated on the surface of the fibrous carbon material. By such a surface treatment, the cohesive tendency of the fibrous carbon material may be reduced. Furthermore, by using a fibrous carbon material subjected to the surface treatment, the fibrous carbon material may be uniformly dispersed into the organic solvent in which the polyamic acid is diluted.

In step i), during the mixing and dispersing the fibrous carbon material into the organic solvent in which the polyamic acid is diluted, a dispersant may be further included to disperse the fibrous carbon material. The dispersant, although not limited to, may be any compound which is able to serve to help the fibrous carbon material to be mixed with the organic solvent in which the polyamic acid is diluted and to be thus uniformly dispersed throughout the organic solvent. For example, a block polymer such as a styrene-butadiene-styrene (SBS) block polymer or a styrene-butadiene-ethylene-styrene (SBES) block polymer, may be used as the dispersant.

In step i), the mixing and dispersing the fibrous carbon material into the organic solvent in which the polyamic acid is diluted, may be performed at room temperature (about 15 to 30 °C) using a mixer which is generally able to be driven at a rotational speed of 10,000 rpm or more. The temperature range and rotational speed range may be such conditions that the fibrous carbon material may be smoothly dispersed in the organic solvent in which the polyamic acid is diluted. If the temperature is too high, polyimidization by which the polyamic acid is transformed into polyimide, may proceed at an early stage.

Furthermore, in a method of preparing a surface-coated positive electrode active material according to an embodiment of the present invention, the fibrous carbon material may be used in the amount of 0.05 to 5 parts by weight, and preferably 0.2 to 2 parts by weight, based on 100 parts by weight of the positive electrode active material which is used in step ii).

In a method of preparing a surface-coated positive electrode active material according to an embodiment of the present invention, step ii) may include dispersing a positive electrode active material into the mixed solution prepared in step i), to form, on the surface of the positive electrode active material, a film including the polyamic acid and the fibrous carbon material.

It is preferable that the positive electrode active material is added into the mixed solution and then dispersed for 1 hour or more using a high-speed mixer for uniform dispersion in the mixed solution. When the solvent is removed by heating and concentrating the resultant solution after it is confirmed that the positive electrode active material is uniformly dispersed, it is possible to obtain a positive electrode active material which is surface-coated with a film including the polyamic acid and the fibrous carbon material.

In a method of preparing a surface-coated positive electrode active material according to an embodiment of the present invention, step iii) may include performing imidization of the positive electrode active material which is obtained from step ii) and includes the film.

The imidization may be performed by heating the positive electrode active material, which is obtained from step ii) and includes the film, up to about 300 to 400 °C at a heating rate of 3 °C/min with intervals of 50 to 100 °C, and then holding for 10 to 120 minutes in the range of 300 to 400 °C. Furthermore, after the positive electrode active material is heated with intervals of 50 to 100 °C, for example, the elevated temperature may be maintained for 10 to 120 minutes, and then the positive electrode active material may be heated again. More specifically, the imidization may be performed by heating the positive electrode active material including the film up to 60 °C, 120 °C, 200 °C, 300 °C, and 400 °C at a heating rate of 3 °C/min, respectively, and then holding for 30 minutes at 60 °C, for 30 minutes at 120 °C, for 60 minutes at 200 °C, for 60 minutes at 300 °C, and for 10 minutes at 400 °C.

On the surface of the positive electrode active material obtained from step ii), a nanofilm including the polyimide and the fibrous carbon material may be formed by step iii).

A surface-coated positive electrode active material including: a positive electrode active material; and a nanofilm including polyimide and a fibrous carbon material on the surface of the positive electrode active material according to an embodiment of the present invention, prevents the positive electrode active material from directly reacting with an electrolytic solution. Therefore, cycle life characteristics may be improved in both a normal-voltage region and a high-voltage region, and the effect of improving the cycle life characteristics may be greater particularly under high-temperature and high-voltage conditions.

As terms used in the description and claims, "normal voltage" means the case where the charging voltage of a lithium secondary battery is in the range of 3.0 to 4.2 V, "high voltage" may mean the case where the charging voltage is in the range of 4.2 to 5.0 V, and "high temperature" may mean the range of 45 to 65 °C.

Furthermore, the present invention provides a positive electrode including the surface-coated positive electrode active material.

The positive electrode may be prepared by ordinary methods known in the art. For example, the surface-coated positive electrode active material is mixed with a solvent, and if necessary, a binder, a conducting material, and a dispersant, and the mixture is agitated to prepare slurry, then the slurry is applied (coated) onto a current collector made of a metallic material, and thereafter the current collector coated with the slurry is compressed and dried to prepare the positive electrode.

For the current collector, any metallic material may be used as long as it has a high conductivity, has no reactivity in the voltage range of a battery, and the slurry of the positive electrode active material may easily adhere thereto. Examples of a cathodic current collector may include, but are not limited to, aluminum, nickel, or a foil prepared by combinations thereof.

The solvent for forming the positive electrode may be an organic solvent such as N-methyl pyrrolidone (NMP), dimethyl formamide (DMF), acetone, and dimethyl acetamide, or water, or the like. These solvents may be used individually or in combination of two or more. The usage of the solvent is enough if it can dissolve and disperse the positive electrode active material, the binder, and the conducting material, considering the coated thickness of slurry and manufacturing yields.

Examples of the binder may include various kinds of binder polymers such as polyvinylidenefluoride-hexafluoropropylene copolymer (PVDF-co-HFP), polyvinylidenefluoride, polyacrylonitrile, polymethylmethacrylate, polyvinylalcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, ethylenepropylene-diene monomer (EPDM), sulfonated EPDM, styrene butadiene rubber (SBR), fluororubber, poly acrylic acid, and polymers in which hydrogen contained in each aforesaid material is replaced by Li, Na, Ca, or the like, or various copolymers.

The conducting material is not particularly limited as long as it has conductivity without causing chemical changes in the produced battery. For example, graphite such as natural graphite or artificial graphite; carbon black such as carbon black, acetylene black, ketjenblack, channel black, furnace black, lamp black, or thermo-black; conductive fibers such as carbon fibers or metal fibers; conductive tubes such as carbon nanotubes; metal powder such as fluorocarbon, aluminum, and nickel powder; conductive whisker such as zinc oxide or potassium titanate; conductive metal oxide such as titanium oxide; conductive materials such as polyphenylene derivatives may be used as the conducting material.

Aqueous dispersants or organic dispersants such as N-methyl-2-pyrrolidone may be used as the dispersant.

Furthermore, the present invention provides a secondary battery including the positive electrode, an negative electrode, and a separator disposed between the positive electrode and the negative electrode.

As examples of an negative electrode active material used for the negative electrode according to an embodiment of the present invention, carbon materials, lithium metal, silicon, or tin in which lithium ions are able to be intercalated and deintercalated, may be generally used. Preferably, carbon materials may be used, and low crystalline carbon, highly crystalline carbon, and the like may be all used as the carbon material. Representative examples of the low crystalline carbon include soft carbon and hard carbon, and representative examples of the highly crystalline carbon include natural carbon, Kish graphite, pyrolytic carbon, mesophase pitch based carbon fibers, meso-carbon microbeads, mesophase pitches, and backed carbon such as petroleum or coal tar pitch derived coke.

Furthermore, an anodic current collector is generally prepared with a thickness of 3 to 500 $\mu$m. Such an anodic current collector is not particularly limited as long as it has conductivity without causing chemical changes in the produced battery. For example, copper, stainless steel, aluminum, nickel, titanium, backed carbon, copper or stainless steel which is surface-treated with carbon, nickel, titanium, silver, or the like, aluminum-cadmium alloys may be used. As in the cathodic current collector, fine irregularities may be formed on the surface of the anodic current collector to increase bond strength with the negative electrode active material, and the anodic current collector may be used in various forms such as a film, a sheet, a foil, a net, a porous body, a foamed body, or a non-woven fabric body.

As with the positive electrode, any material generally used in the art may be used as a binder and a conducting material which are used for the negative electrode. The negative electrode active material and the additives are mixed and agitated to prepare slurry of the negative electrode active material, then the slurry is coated onto a current collector, and thereafter the current collector coated with the slurry is compressed to prepare the negative electrode.

Furthermore, general porous polymer films conventionally used as a separator may be used as the separator. For example, a porous polymer film made from polyolefin-based polymers such as an ethylene homopolymer, a propylene homopolymer, an ethylene/butene copolymer, an ethylene/hexene copolymer, and an ethylene/methacrylate copolymer may be used alone or in a laminated form. Alternatively, general porous non-woven fabrics such as non-woven fabrics made from glass fibers having a high melting point, polyethyleneterephthalate fibers, or the like, may be used, but the present invention is not limited thereto.

Any material generally used in an electrolyte for lithium secondary batteries may be unrestrictedly used for a lithium salt which may be included as an electrolyte used in the present invention, and an anion of the lithium salt may be, for example, any one selected from the group consisting of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_5SO_2)_3C^-$, $CF_3(CF_2)_7SO_3^-$, $CF_3SO_2^-$, $CH_3CO_2^-$, $SCN^-$ and $(CF_3CF_2SO_2)_2N^-$.

Examples of the electrolyte used in the present invention may include an organic liquid electrolyte, an inorganic liquid electrolyte, a solid polymer electrolyte, a gel-type polymer electrolyte, a solid inorganic electrolyte, and a molten inorganic electrolyte, which may be used in manufacturing lithium secondary batteries, but the present invention is not limited thereto.

Although not particularly limited in terms of a shape, a lithium secondary battery of the present invention may have, for example, a cylinder shape using a can, a square shape, a pouch shape, or a coin shape.

The lithium secondary battery according to the present invention may not only be used for a battery cell which is used as a power supply of a small-sized device but also preferably be used as a single cell for a middle/large sized battery module including a plurality of battery cells.

Preferred examples of the middle/large device may include, but are not limited to, electric vehicles, hybrid electric vehicles, plug-in hybrid electric vehicles, and electric power storage systems.

Hereinafter, the present invention will be described in detail with reference to Examples in order to concretely describe the present invention. The invention may, however, be embodied in many different forms and should not be construed as being limited to the embodiments set forth herein; rather, these embodiments are provided to more completely describe the concept of the invention to those of ordinary skill in the art.

**Example**

Hereinafter, further descriptions will be made with reference to Examples and Experimental Examples, but the present invention is not limited thereto. Specifically, Comparative Examples 5 and 6 (likewise showing at least partial improvements in the relevant properties over Comparative Examples 1-4) are still within the scope of the present invention as claimed, while being "comparative" to the better performing embodiments of the invention such as Examples 1-5.

**<Preparation of Surface-coated Positive electrode Active Material>**

**Preparation Example 1**

Step i) Preparing Mixed Solution In Which Polyamic Acid And CNT Are Dispersed

0.1 g of a carbon nanotube (CNT) having an average diameter of 50 nm and an average major axis length of 1 $\mu$m was added into 20 g of an solution which was diluted to 0.5 wt% of a polyamic acid in dimethylacetamide as an organic solvent, to prepare a mixed solution in which the polyamic acid and CNT were uniformly dispersed.

Step ii) Forming Film On Positive electrode Active Material

20 g of $LiNi_{0.6}Mn_{0.2}Co_{0.2}O_2$ particles as a positive electrode active material was added into the mixed solution obtained from step i), and then the resultant solution was agitated for 1 hour using a high-speed mixer. While continuing agitation, the temperature of the resultant solution was increased to the boiling point of the solvent, so that the solvent was evaporated to prepare a positive electrode active material which was surface-coated with a film including the polyamic acid and CNT.

Step iii) Performing Imidization To Prepare Surface-Coated Positive electrode Active Material Having Nanofilm Including Polyimide and CNT

The positive electrode active material which was surface-coated with the film including the polyamic acid and CNT and prepared in step ii), was heated to 60 °C, 120 °C, 200 °C, 300 °C, and 400 °C at a heating rate of 3 °C/min, respectively, and then held for 30 minutes at 60 °C, for 30 minutes at 120 °C, for 60 minutes at 200 °C, 60 minutes at 300 °C, and for 10 minutes at 400 °C to perform imidization. Surface-coated positive electrode active material, $LiNi_{0.6}Mn_{0.2}Co_{0.2}O_2$, having a nanofilm including polyimide and CNT was prepared after the imidization was completed. In this case, the weight ratio of polyimide to CNT in the nanofilm was 1:1.

**Preparation Example 2**

Surface-coated positive electrode active material, $LiNi_{0.6}Mn_{0.2}Co_{0.2}O_2$, having a nanofilm including polyimide and CNT was prepared using the same method as in Preparation Example 1 except that the weight ratio of the polyamic acid to CNT in step i) of Preparation Example 1 was differently controlled so that the weight ratio of polyimide to CNT in the final nanofilm was 1:2.

**Preparation Example 3**

Surface-coated positive electrode active material, $LiNi_{0.6}Mn_{0.2}Co_{0.2}O_2$, having a nanofilm including polyimide and CNT was prepared using the same method as in Preparation Example 1 except that the weight ratio of the polyamic acid to CNT was controlled in step i) of Preparation Example 1 so that the weight ratio of polyimide to CNT in the final nanofilm was 1:5.

**Preparation Example 4**

Surface-coated positive electrode active material, $LiNi_{0.6}Mn_{0.2}Co_{0.2}O_2$, having a nanofilm including polyimide and CNT was prepared using the same method as in Preparation Example 1 except that the weight ratio of the polyamic acid to CNT was controlled in step i) of Preparation Example 1 so that the weight ratio of polyimide to CNT in the final nanofilm was 1:7.

**Preparation Example 5**

Surface-coated positive electrode active material, $LiNi_{0.6}Mn_{0.2}Co_{0.2}O_2$, having a nanofilm including polyimide and CNT was prepared using the same method as in Preparation Example 1 except that the weight ratio of the polyamic acid to CNT was controlled in step i) of Preparation Example 1 so that the weight ratio of polyimide to CNT in the final nanofilm was 1:10.

**Comparative Preparation Example 1**

Contrary to Preparation Example 1, positive electrode active material, $LiNi_{0.6}Mn_{0.2}Co_{0.2}O_2$ which was not surface-coated, was used.

**Comparative Preparation Example 2**

Positive electrode active material, $LiNi_{0.6}Mn_{0.2}Co_{0.2}O_2$ which was surface-coated with polyimide, was prepared using the same method as in Preparation Example 1 except that CNT was not added in Example 1.

**Comparative Preparation Example 3**

Surface-coated positive electrode active material, $LiNi_{0.6}Mn_{0.2}Co_{0.2}O_2$, was prepared using the same method as in Preparation Example 1 except that imidization was not performed using an organic solvent with no polyamic acid added but the nanofilm was formed of only CNT.

**Comparative Preparation Example 4**

Surface-coated $LiNi_{0.6}Mn_{0.2}Co_{0.2}O_2$ as a positive electrode active material, was prepared using the same method as in Preparation Example 1 except that a nanofilm including polyimide and ketjenblack using ketjenblack instead of CNT was formed.

**Comparative Preparation Example 5**

Surface-coated $LiNi_{0.6}Mn_{0.2}Co_{0.2}O_2$ as a positive electrode active material having a nanofilm including polyimide and CNT was prepared using the same method as in Preparation Example 1 except that the weight ratio of the polyamic acid to CNT was controlled in step i) of Preparation Example 1 so that the weight ratio of polyimide to CNT in the final nanofilm was 1:0.5.

**Comparative Preparation Example 6**

Surface-coated $LiNi_{0.6}Mn_{0.2}Co_{0.2}O_2$ as a positive electrode active material having a nanofilm including polyimide and CNT was prepared using the same method as in Preparation Example 1 except that the weight ratio of the polyamic acid to CNT was controlled in step i) of Preparation Example 1 so that the weight ratio of polyimide to CNT in the final nanofilm was 1:12.

**<Preparation of Lithium Secondary Battery>**

**Example 1**

Preparation of Positive electrode

Surface-coated $LiNi_{0.6}Mn_{0.2}Co_{0.2}O_2$ as a positive electrode active material, which was prepared in Preparation Example 1, was used.

The positive electrode active material, carbon black as a conducting material, and polyvinylidenefluoride (PVDF) as a binder were mixed at the weight ratio of 95:3:2, and then the resulting mixture was added into an N-methyl-2-pyrrolidone (NMP) solvent to prepare a cathodic slurry mixture. The cathodic slurry mixture was coated onto an aluminum thin film as a cathodic current collector having a thickness of about 20 $\mu$m, dried for 2 hours at 130 °C, and then the coated aluminum thin film was subjected to roll pressing to prepare a positive electrode.

Preparation of Negative electrode

A lithium metal foil was used as an negative electrode.

Preparation of Electrolytic Solution

As electrolyte, ethylene carbonate (EC) and ethylmethylcarbonate (EMC) were mixed at volume ratio of 1:2 to prepare a non-aqueous electrolyte solvent, and then $LiPF_6$ was added into the non-aqueous electrolyte solvent to prepare a non-aqueous electrolytic solution of 1M LiPF$_6$.

Preparation of Lithium Secondary Battery

A polyethylene separator (Tonen Co., F$_2$OBHE, 20 $\mu$m thickness) was used such that a mixed separator consisting of an electrolytic solution and polypropylene was disposed between the positive electrode and the negative electrode thus prepared, and then a polymer cell was prepared by a conventional method. The prepared non-aqueous electrolytic solution was then injected to the polymer cell to prepare a coin cell-type lithium secondary battery.

**Examples 2 to 5**

Lithium secondary batteries were prepared using the same method as in Example 1 except that the positive electrode active materials in Preparation Examples 2 to 5 were used, respectively.

**Comparative Examples 1 to 6**

Lithium secondary batteries were prepared using the same method as in Example 1 except that the positive electrode active materials in Comparative Preparation Examples 1 to 6 were used, respectively.

**Experimental Example 1: SEM Micrograph**

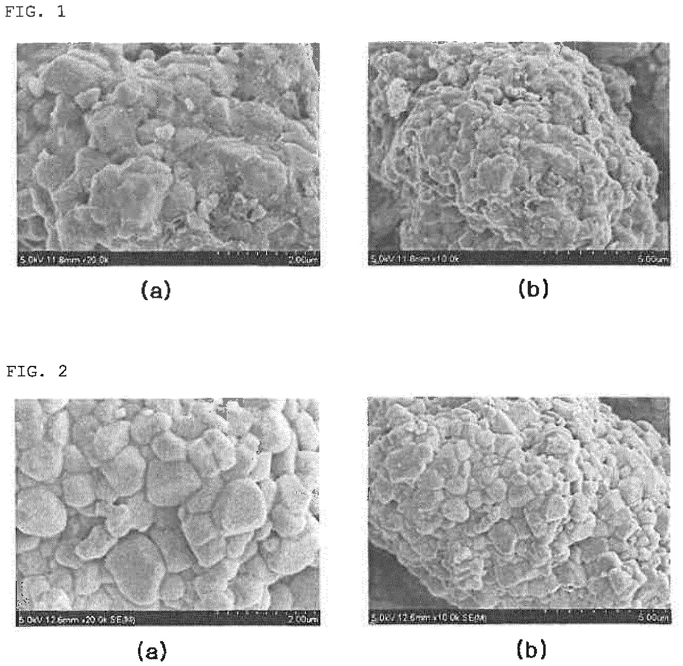

Morphologies of the positive electrode active materials prepared in Preparation Example 1, and Comparative Preparation Examples 1 and 2 were analyzed using field emission scanning electron microscope (FE-SEM). The results are shown FIGS. 1 to 3, respectively.

Specifically, FIG. 1 shows the surface of the surface-coated LiNi$_{0.6}$Mn$_{0.2}$Co$_{0.2}$O$_2$ particles having the nanofilm including polyimide and CNT, which was prepared in Preparation Example 1 of the present invention. It could be seen that a nanofilm having a thickness of a few nanometer with polyimide and CNT being well dispersed, was formed on the surface of the coated LiNi$_{0.6}$Mn$_{0.2}$Co$_{0.2}$O$_2$ particles.

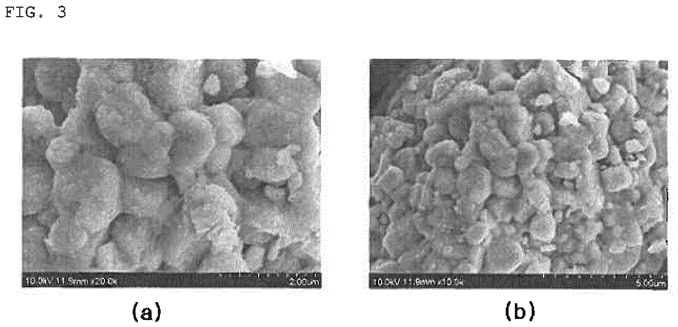

FIG. 2 shows pure LiNi$_{0.6}$Mn$_{0.2}$Co$_{0.2}$O$_2$ particles which is not surface-coated, as LiNi$_{0.6}$Mn$_{0.2}$Co$_{0.2}$O$_2$ particles in Comparative Preparation Example 1. FIG. 3 shows LiNi$_{0.6}$Mn$_{0.2}$Co$_{0.2}$O$_2$ particles surface-coated with polyimide, which was prepared in Comparative Preparation Example 2, and CNT was not observed.

**Experimental Example 2: Evaluation of Charge/Discharge Capacity and Efficiency Characteristics According To Compositional Change Of Nanofilm**

Lithium secondary batteries (battery capacity of 4.3 mAh) in Example 1 and Comparative Examples 1 to 4 were charged and discharged with 0.5 C in the voltage range of 3 to 4.4 V at 55 °C. C-rate is, as shown in Equation 1 below, a ratio of capacity when a battery charged with 0.5 C is discharged with 0.1 C to capacity when the battery charged with 0.5 C is discharged with 2 C.

[Equation 1]

$$C-rate = \frac{Capacity\ when\ discharged\ with\ 2\ C}{Capacity\ when\ discharged\ with\ 0.1\ C}$$

[Table 1]

| | Components in Nanofilm | First Charge Capacity (mAh/g) | First Discharge Capacity (mAh/g) | First Efficiency (%) | 1 C Discharge Capacity (mAh/g) | C-rate (%) | 50th capacity retention (%) |
|---|---|---|---|---|---|---|---|
| Example 1 | PI + CNT | 220.5 | 195.8 | 88.8 | 182.1 | 89.5 | 92 |

(continued)

| | Components in Nanofilm | First Charge Capacity (mAh/g) | First Discharge Capacity (mAh/g) | First Efficiency (%) | 1 C Discharge Capacity (mAh/g) | C-rate (%) | 50th capacity retention (%) |
|---|---|---|---|---|---|---|---|
| Comparative Example 1 | - | 221.5 | 195.8 | 88.4 | 183.7 | 89.5 | 75 |
| Comparative Example 2 | PI | 220.3 | 193.3 | 87.7 | 180.7 | 86.6 | 90 |
| Comparative Example 3 | CNT | 220.5 | 196.0 | 88.9 | 182.1 | 89.5 | 80 |
| Comparative Example 4 | PI + KB | 220.4 | 193.3 | 87.7 | 180.7 | 88.0 | 90 |

As shown in Table 1, it can be found that the lithium secondary battery in Example 1 has a similar initial charge/discharge capacity but the rate performance (C-rate) and the 50th capacity retention thereof are significantly excellent, compared with lithium secondary batteries in Comparative Examples 1 to 4.

Specifically, the lithium secondary battery in Example 1 was different in the 50th capacity retention by about 2 to 17 % from lithium secondary batteries in Comparative Examples 1 to 4.

Furthermore, even in the case of a surface-coated positive electrode active material, the lithium secondary battery in Example 1 in which a positive electrode active material having a nanofilm including both CNT and polyimide was used, was different in the rate performance by up to 3 % and in the initial efficiency by about 1 % from lithium secondary batteries in Comparative Examples 1 to 4.

Therefore, comprehensively considering these results, it was confirmed that when a positive electrode active material coated with a nanofilm essentially including polyimide and a fibrous carbon material was used for a lithium secondary battery, the performance of the lithium secondary battery could be improved as a whole, compared with the case where any one of two materials was not included.

**Experimental Example 3: Evaluation of Charge/Discharge Capacity and Efficiency Characteristics According To Change In Weight Ratio Of Polyimide To Fibrous Carbon Material**

Charge/discharge capacity and efficiency characteristics were evaluated for lithium secondary batteries (battery capacity of 4.3 mAh) in Examples 2 to 5 and Comparative Examples 5 and 6, under the same conditions as Experimental Example 2. The results are shown in Table 2 below.

[Table 2]

| | PI: CNT | First Charge Capacity (mAh/g) | First Discharge Capacity (mAh/g) | First Efficiency (%) | 1 C Discharge Capacity (mAh/g) | C-rate (%) | 50th capacity retention (%) |
|---|---|---|---|---|---|---|---|
| Example 1 | 1:1 | 220.5 | 195.8 | 88.8 | 182.1 | 89.5 | 92 |
| Example 2 | 1:2 | 220.3 | 195.8 | 88.9 | 191.8 | 89.6 | 93 |
| Example 3 | 1:5 | 220.5 | 195.7 | 88.8 | 182.4 | 89.7 | 92 |
| Example 4 | 1:7 | 221.5 | 195.9 | 88.7 | 182.5 | 89.5 | 93 |
| Example 5 | 1:10 | 220.5 | 195.8 | 88.8 | 182.1 | 89.5 | 92 |
| Comparative Example 5 | 1:0.5 | 220.5 | 195.8 | 88.8 | 182.1 | 87.0 | 90 |
| Comparative Example 6 | 1:12 | 220.5 | 195.8 | 88.8 | 182.5 | 89.5 | 80 |

As shown in Table 2, it can be found that lithium secondary batteries in Examples 1 to 5 have similar initial charge/discharge capacities but rate performances (C-rate) and 50th capacity retentions thereof are significantly excellent, compared with lithium secondary batteries in Comparative Examples 5 and 6.

Specifically, lithium secondary batteries in Examples 1 to 5 in which the ratio of polyimide to a fibrous carbon material was properly adjusted, were different in 50th capacity retentions by about 2 to 13 % from lithium secondary batteries in Comparative Examples 5 and 6 in which the ratio was not properly adjusted.

Furthermore, lithium secondary batteries in Examples 1 to 5 were different in the rate performance by up to about 3 % from lithium secondary batteries in Comparative Examples 5 and 6.

Therefore, comprehensively considering these results, it was confirmed that when the mixing ratio of polyimide to a fibrous carbon material included in the nanofilm was properly adjusted, the performance of the lithium secondary battery could be improved as a whole.

While this invention has been particularly shown and described with reference to preferred embodiments thereof and drawings, it will be understood by those skilled in the art that various changes in form and details may be made therein without departing from the scope of the invention as defined by the appended claims.

**Claims**

1. A surface-coated positive electrode active material, comprising:

   a positive electrode active material particle; and
   a nanofilm coated on the entire surface of the positive electrode active material particle,
   wherein the nanofilm includes polyimide (PI) and a carbon nanotube.

2. The surface-coated positive electrode active material of claim 1, the nanofilm has a thickness in the range of 1 to 200 nm.

3. The surface-coated positive electrode active material of claim 1, wherein the polyimide and the carbon nanotube are included at the weight ratio of 1:1 to 1:10.

4. The surface-coated positive electrode active material of claim 1, wherein the content of the carbon nanotube is 0.05 to 5 wt%, based on total weight of the surface-coated positive electrode active material.

5. The surface-coated positive electrode active material of claim 1, wherein the carbon nanotube has an average diameter of 5 to 100 nm and an average major axis length of 0.1 to 5 $\mu$m.

6. The surface-coated positive electrode active material of claim 1, wherein the carbon nanotube has an aspect ratio of 1 to 1,000.

7. The surface-coated positive electrode active material of claim 1, wherein the positive electrode active material is any one or a mixture of two or more selected from the group consisting of oxides having Chemical Formulas 1 to 3 below, $V_2O_5$, TiS, and MoS:

   <Chemical Formula 1>         $Li_{1+x}[Ni_aCo_bMn_c]O_2$

   (-0.5 $\leq$ x $\leq$ 0.6; 0 $\leq$ a, b, c $\leq$ 1; and x+a+b+c=1);

   <Chemical Formula 2>         $LiMn_{2-x}MxO_4$

   (M is at least one selected from the group consisting of Ni, Co, Fe, P, S, Zr, Ti, and Al; and 0 $\leq$ x $\leq$ 2);

   <Chemical Formula 3>         $Li_{1+a}Fe_{1-x}M_x(PO_{4-b})X_b$

   (M is at least one selected from the group consisting of Al, Mg, Ni, Co, Mn, Ti, Ga, Cu, V, Nb, Zr, Ce, In, Zn, and Y; X is at least one selected from the group consisting of F, S, and N; -0.5 $\leq$ x $\leq$ 0.5; 0 $\leq$ x $\leq$ 0.5; and 0 $\leq$ b $\leq$ 0.1).

8. The surface-coated positive electrode active material of claim 8, wherein the positive electrode active material is any one or a mixture of two or more selected from the group consisting of $LiCoO_2$, $LiNiO_2$, $LiMnO_2$, $LiMn_2O_4$, $Li[Ni_aCo_bMn_c]O_2$ (0 < a, b, c $\leq$ 1, and a+b+c=1), and $LiFePO_4$.

9. A method of preparing a surface-coated positive electrode active material, the method comprising:

mixing and dispersing a carbon nanotube into an organic solvent in which a polyamic acid is diluted to prepare a mixed solution;
dispersing a positive electrode active material into the mixed solution to form, on the surface of the positive electrode active material particle, a film including the polyamic acid and the carbon nanotube; and
performing imidization of the positive electrode active material particle including the film.

10. The method of claim 9, wherein the imidization includes holding for 10 to 120 minutes in the range of 300 to 400 °C.

11. The method of claim 10, wherein the imidization further includes heating up to 300 to 400 °C at a heating rate of 3 °C/min with temperature intervals of 50 to 100 °C prior to the holding temperature.

12. The method of claim 9, wherein the carbon nanotube is used in the amount of 0.05 to 5 parts by weight, based on 100 parts by weight of the positive electrode active material.

13. The method of claim 9, wherein the polyamic acid is contained in the organic solvent in the amount of 0.1 to 1 part by weight, based on 100 parts by weight of the organic solvent.

14. The method of claim 9, wherein the polyamic acid is prepared by making aromatic anhydride react with diamine in the same equivalent weight.

15. The method of claim 14, wherein the aromatic anhydride is any one or a mixture of two or more selected from the group consisting of phthalic anhydride, pyromellitic dianhydride, 3,3'4,4'-biphenyltetracarboxylic dianhydride, 4'4-oxydiphthalic anhydride, 3,3'4,4'-benzophenonetetracarboxylic dianhydride, trimellitic ethylene glycol, 4,4'-(4'4-isopropylbiphenoxy)biphthalic anhydride, and trimellitic anhydride.

16. The method of claim 14, wherein the diamine is any one or a mixture of two or more selected from the group consisting of 4,4'-oxydianiline, benzene-1,4-diamine, 2,2-bis(4-(4-aminophenoxy)-phenyl)propane, p-methylenedianiline, propyltetramethyldisiloxane, polyaromatic amine, 4,4'-diaminodiphenyl sulfone, 2,2'-bis(trifluoromethyl)-4,4'-diaminobiphenyl, and 3,5-diamino-1,2,4-triazole.

17. The method of claim 9, wherein the polyamic acid includes a quaternary polyamic acid including pyromellitic dianhydride, biphenyl dianhydride, phenylenediamine, and oxydianiline.

18. The method of claim 9, wherein the organic solvent includes any one or a mixture of two or more selected from the group consisting of cyclohexane, carbon tetrachloride, chloroform, methylene chloride, dimethylformamide, dimethylacetamide, and N-methylpyrrolidone.

**Patentansprüche**

1. Oberflächenbeschichtetes Positivelektrodenaktivmaterial, umfassend:

ein Positivelektrodenaktivmaterialteilchen; und
einen Nanofilm, der auf der gesamten Oberfläche des Positivelektrodenaktivmaterialteilchens beschichtet ist, wobei der Nanofilm Polyimid (PI) und ein Kohlenstoffnanoröhrchen einschließt.

2. Oberflächenbeschichtetes Positivelektrodenaktivmaterial nach Anspruch 1, wobei der Nanofilm eine Dicke im Bereich von 1 bis 200 nm aufweist.

3. Oberflächenbeschichtetes Positivelektrodenaktivmaterial nach Anspruch 1, wobei das Polyimid und das Kohlenstoffnanoröhrchen in einem Gewichtsverhältnis von 1:1 bis 1:10 eingeschlossen sind.

4. Oberflächenbeschichtetes Positivelektrodenaktivmaterial nach Anspruch 1, wobei der Gehalt des Kohlenstoffnanoröhrchen 0,05 bis 5 Gew.-%, basierend auf einem Gesamtgewicht des oberflächenbeschichteten Positivelektrodenaktivmaterials, ist.

5. Oberflächenbeschichtetes Positivelektrodenaktivmaterial nach Anspruch 1, wobei das Kohlenstoffnanoröhrchen einen durchschnittlichen Durchmesser von 5 bis 100 nm und eine durchschnittliche Hauptachsenlänge von 0,1 bis 5 $\mu$m aufweist.

6. Oberflächenbeschichtetes Positivelektrodenaktivmaterial nach Anspruch 1, wobei das Kohlenstoffnanoröhrchen ein Längenverhältnis von 1 bis 1,000 aufweist.

7. Oberflächenbeschichtetes Positivelektrodenaktivmaterial nach Anspruch 1, wobei das Positivelektrodenaktivmaterial irgendeines oder eine Mischung aus zwei oder mehreren ist, ausgewählt aus der Gruppe bestehend aus Oxiden mit chemischen Formeln 1 bis 3 unten, $V_2O_5$, TiS und MoS:

<Chemische Formel 1> $Li_{1+x}[Ni_aCo_bMn_c]O_2$

($-0.5 \leq x \leq 0.6$; $0 \leq a, b, c \leq 1$; und $x+a+b+c=1$);

<Chemische Formel 2> $LiMn_{2-x}MxO_4$

(M ist wenigstens eines ausgewählt aus der Gruppe bestehend aus Ni, Co, Fe, P, S, Zr, Ti, and Al; und $0 \leq x \leq 2$);

<Chemische Formel 3> $Li_{1+a}Fe_{1-x}M_x(PO_{4-b})X_b$

(M ist wenigstens eines ausgewählt aus der Gruppe bestehend aus Al, Mg, Ni, Co, Mn, Ti, Ga, Cu, V, Nb, Zr, Ce, In, Zn, und Y; X ist wenigstens eines ausgewählt aus der Gruppe bestehend aus F, S, und N; $-0.5 \leq x \leq 0.5$; $0 \leq x \leq 0.5$; und $0 \leq b \leq 0.1$).

8. Oberflächenbeschichtetes Positivelektrodenaktivmaterial nach Anspruch 8, wobei das Positivelektrodenaktivmaterial irgendeines oder eine Mischung aus zwei oder mehreren ist, ausgewählt aus der Gruppe bestehend aus $LiCoO_2$, $LiNiO_2$, $LiMnO_2$, $LiMn_2O_4$, $Li[Ni_aCo_bMn_c]O_2$ ($0 < a, b, c \leq 1$, and $a+b+c=1$), und $LiFePO_4$.

9. Verfahren zum Herstellen eines oberflächenbeschichteten Positivelektrodenaktivmaterials, wobei das Verfahren umfasst:

Mischen und Dispergieren eines Kohlenstoffnanoröhrchens in einem organischen Lösungsmittel, in dem eine Polyamidsäure verdünnt ist, um eine gemischte Lösung herzustellen;
Dispergieren eines Positivelektrodenaktivmaterials in die gemischte Lösung, um, auf der Oberfläche des Positivelektrodenaktivmaterialteilchens, einen Film einschließend die Polyamidsäure und das Kohlenstoffnanoröhrchen zu bilden; und
Durchführen eines Imidisierung des Positivelektrodenaktivmaterialteilchens einschließend den Film.

10. Verfahren nach Anspruch 9, wobei die Imidisierung ein Halten für 10 bis 120 min in einem Bereich von 300 bis 400°C einschließt.

11. Verfahren nach Anspruch 10, wobei die Imidisierung ferner ein Erwärmen auf bis zu 300 bis 400°C mit einer Aufheizgeschwindigkeit von 3°C/min mit Temperaturintervallen von 50 bis 100°C vor der Haltetemperatur einschließt.

12. Verfahren nach Anspruch 9, wobei das Kohlenstoffnanoröhrchen in der Menge von 0,05 bis 5 Gewichtsteilen, basierend auf 100 Gewichtsteilen des Positivelektrodenaktivmaterials, verwendet wird.

13. Verfahren nach Anspruch 9, wobei die Polyamidsäure in dem organischen Lösungsmittel in der Menge von 0,1 bis 1 Gewichtsteil, basierend auf 100 Gewichtsteilen des organischen Lösungsmittels, enthalten ist.

14. Verfahren nach Anspruch 9, wobei die Polyamidsäure hergestellt wird durch Umsetzen von aromatischem Anhydrid mit Diamin im gleichen Äquivalentgewicht.

15. Verfahren nach Anspruch 14, wobei das aromatische Anhydrid irgendeines oder eine Mischung aus zwei oder mehreren ist, ausgewählt aus der Gruppe bestehend aus Phthalsäureanhydrid, Pyromellithdianhydrid, 3,3',4,4'-Biphenyltetracarbonsäure dianhydrid, 4'4-Oxydiphthalsäureanhydrid, 3,3',4,4'-Benzophenontetracarbonsäure dianhydrid, Trimellithethylenglycol, 4,4'-(4'4-Isopropylbiphenoxy)biphthalsäure anhydrid und Trimellithsäureanhydrid.

**16.** Verfahren nach Anspruch 14, wobei das Diamin irgendeines oder eine Mischung aus zwei oder mehreren ist, ausgewählt aus der Gruppe bestehend aus 4,4'-Oxydianilin, Benzol-1,4-diamin, 2,2-Bis(4-(4-aminophenoxy)-phenyl)propan, p-Methylendianilin, Propyltetramethyldisiloxan, polyaromatischem Amin, 4,4'-Diaminodiphenylsulfon, 2,2'-Bis(trifluormethyl)-4,4'-diaminobiphenyl, und 3,5-Diamino-1,2,4-triazol.

**17.** Verfahren nach Anspruch 9, wobei die Polyamidsäure eine quarternäre Polyamidsäure einschließend Pyromellithsäuredianhydrid, Biphenyldianhydrid, Phenylenediamin, und Oxydianilin einschließt.

**18.** Verfahren nach Anspruch 9, wobei das organische Lösungsmittel irgendeines oder eine Mischung aus zwei oder mehreren einschließt, ausgewählt aus der Gruppe bestehend aus Cyclohexan, Kohlenstofftetrachlorid, Chloroform, Methylenchlorid, Dimethylformamid, Dimethylacetamid, und N-Methylpyrrolidon.

**Revendications**

**1.** Matériau actif d'électrode positive à surface revêtue, comprenant :

une particule de matériau actif d'électrode positive ; et
un nanofilm revêtu sur toute la surface de la particule de matériau actif d'électrode positive,
dans lequel le nanofilm contient un polyimide (PI) et un nanotube de carbone.

**2.** Matériau actif d'électrode positive à surface revêtue selon la revendication1, le nanofilm ayant une épaisseur se situant dans la plage comprise entre 1 et 200 nm.

**3.** Matériau actif d'électrode positive à surface revêtue selon la revendication1, dans lequel le polyimide et le nanotube de carbone sont contenus selon un rapport pondéral de 1 : 1 à 1 : 10.

**4.** Matériau actif d'électrode positive à surface revêtue selon la revendication1, dans lequel la teneur en nanotube de carbone est de 0,05 à 5 % en poids, par rapport au poids total du matériau actif d'électrode positive à surface revêtue.

**5.** Matériau actif d'électrode positive à surface revêtue selon la revendication1, dans lequel la nanotube de carbone a un diamètre moyen de 5 à 100 nm et une longueur moyenne de l'axe principal de 0,1 à 5 $\mu$m.

**6.** Matériau actif d'électrode positive à surface revêtue selon la revendication1, dans lequel le nanotube de carbone a un rapport hauteur/largeur de 1 à 1.000.

**7.** Matériau actif d'électrode positive à surface revêtue selon la revendication1, dans lequel le matériau actif d'électrode positive est un mélange quelconque de deux ou de plusieurs composés sélectionnés dans le groupe constitué d'oxydes ayant les formules chimiques 1 à 3 ci-dessous, $V_2O_5$, TiS et MoS ;

<Formule chimique 1> $\qquad$ $Li_{1-x}[Ni_aCo_bMn_c]O_2$

($-0,5 \leq x \leq 0,6$ ; $0 \leq a, b, c \leq 1$ ; ; et$x + a + b + c = 1$) ;

<Formule chimique 2> $\qquad$ $LiMn_{2-x}MxO_4$

(M représente au moins un composé sélectionné dans le groupe constitué de Ni, Co, F2, P, S, Zr, Ti et Al ; et $0 \leq x \leq 2$ ;

<Formule chimique 3> $\qquad$ $Li_{1+a}Fe_{1+x}M_x(PO_{4-b})X_b$

(M représente au moins un composé sélectionné dans le groupe constitué de Al, Mg, Ni, Co, Mn, Ti, Ga, Cu, V, Nb, Zr, Ce, In, Zn et Y ; X représente au moins un composé sélectionné dans le groupe constitué de F, S et N ; $-0,5 \leq x \leq 0,5$ ; $0 \leq x \leq 0,5$ ; et $0 \leq b \leq 0,1$).

**8.** Matériau actif d'électrode positive à surface revêtue selon la revendication 8, dans lequel le matériau actif d'électrode positive est un composé quelconque ou un mélange de deux ou de plusieurs composés sélectionnés dans le groupe constitué de $LiCoO_2$, $LiNiO_2$, $LiMnO_2$, $LiMn_2O_4$, $Li[Ni_aCo_bMn_c]O_2$ ($0 < a, b, c \leq 1$, et $a+b+c = 1$) et $LiFePO_4$.

9.  Procédé de préparation d'un matériau actif d'électrode positive à surface revêtue, le procédé comprenant les étapes consistant à :

    mélanger et disperser un nanotube de carbone dans un solvant organique dans lequel est dilué un acide polyamique de manière à préparer une solution mélangée ;
    disperser un matériau actif d'électrode positive dans la solution mélangée de manière à former, sur la surface de la particule de matériau actif d'électrode positive, un film contenant l'acide polyamique et le nanotube de carbone ; et
    réaliser une imidisation de la particule de matériau actif d'électrode positive contenant le film.

10. Procédé selon la revendication 9, dans lequel l'imidisation implique le maintien de la particule pendant10 à 120 minutes dans une plage de températures de 300 à 400 °C.

11. Procédé selon la revendication 10, dans lequel l'imidisation consiste en outre à chauffer jusqu'à une température de 300 à 400 °C à une vitesse de chauffe de 3 °C/min avec des intervalles de température de 50 à 100 °C avant la température de maintien.

12. Procédé selon la revendication 9, dans lequel le nanotube de carbone est utilisé en une quantité de 0,05 à 5 parties en poids, par rapport à 100 parties en poids du matériau actif d'électrode positive.

13. Procédé selon la revendication 9, dans lequel l'acide polyamique est contenu dans le solvant organique en une quantité de 0,1 à 1 partie en poids, par rapport à 100 parties en poids du solvant organique.

14. Procédé selon la revendication 9, dans lequel l'acide polyamique est préparé en faisant réagir l'anhydride aromatique avec de la diamine au même poids équivalent.

15. Procédé selon la revendication 14, dans lequel l'anhydride aromatique est l'un quelconque ou un mélange de deux ou de plusieurs composés sélectionnés dans le groupe constitué d'anhydride phtalique, de dianhydride pyromellitique, de dianhydride 3,3'4,4'-biphényltétracarboxylique, d'anhydride 4'4-oxydiphtalique, de dianhydride 3,3'4,4'-benzophénonetétracarboxylique, d'éthylène glycol trimellitique, d'anhydride biphtalique 4,4'-(4,4-isopropylbiphénoxy) et d'anhydride trimellitique.

16. Procédé selon la revendication 14, dans lequel la diamine est l'un quelconque ou un mélange de deux ou de plusieurs composés sélectionnés dans le groupe constitué de 4,4'-oxydianiline, benzène-1,4-diamine, 2,2-bis(4-(4aminophénoxy)-phényl-propane, p-méthylènedianiline, propyltétraméthyldisiloxane, amine polyaromatique, 4,4'-diaminodiphényl sulfone, 2,2'-bis(trifluorométhyl)-4,4'-diaminobiphényl et 3,5-diamino-1,2,4-triazole.

17. Procédé selon la revendication 9, dans lequel l'acide polyamique contient un acide polyamique quaternaire contenant du dianhydride pyromellitique, du dianhydride de biphényle, du phénylènediamine et de l'oxydianiline.

18. Procédé selon la revendication 9, dans lequel le solvant organique contient l'un quelconque ou un mélange de deux ou de plusieurs composés sélectionnés dans le groupe constitué de cyclohexane, de tétrachlorure de carbone, de chloroforme, de chlorure de méthylène, de diméthylformamide, de diméthylacétamide et de N-méthylpyrrolidone.

FIG. 1

(a)

(b)

FIG. 2

(a)

(b)

FIG. 3

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013147087 A1
- US 20130177807 A1

- KR 1020100081947 A

**Non-patent literature cited in the description**

- **PARK, J.H. et al.** *Electrochemistry Communications,* 2010, vol. 12 (8), 1099-1102